# EUROPÄISCHE PATENTSCHRIFT

(11) **EP 3 803 149 B1**
(45) Veröffentlichungstag und Bekanntmachung des Hinweises auf die Patenterteilung: **22.10.2025**
(21) Anmeldenummer: 19718631.5
(22) Anmeldetag: 11.04.2019
(51) Int. Cl.: F16F 1/38, B60K 5/12, B60G 21/055

(54) **AGGREGATELAGER**
AGGREGATE BEARING
PALIER D'UNITÉ

(30) Priorität: 06.06.2018 DE 102018113503
(43) Veröffentlichungstag der Anmeldung: 14.04.2021
(73) Patentinhaber: Vibracoustic SE, 69469 Weinheim (DE)
(72) Erfinder: SCHEMER, Thomas, 69257 Weisenbach (DE); LE, Van-Hieu, 68309 Mannheim (DE)
(74) Vertreter: Patentanwälte Olbricht Buchhold Keulertz
(86) Internationale Anmeldenummer: PCT/EP2019/059246
(87) Internationale Veröffentlichungsnummer: WO 2019/233659

(56) Entgegenhaltungen:
- EP-A1- 1 586 789
- EP-A1- 1 628 040
- EP-B1- 1 586 789
- EP-B1- 1 628 040
- DE-A1- 102004 056 884
- DE-B3- 102004 051 112
- DE-B4- 102004 056 884

## Beschreibung

Die Erfindung betrifft ein Aggregatelager für ein Kraftfahrzeugaggregat, aufweisend ein Innenteil, einen elastomeren Tragkörper, in den das Innenteil eingebettet ist, und ein Außenteil, das den Tragkörper umgibt.

Ein Aggregatelager der eingangs genannten Art dient dazu, ein Kraftfahrzeugaggregat, wie beispielsweise einen Verbrennungsmotor, ein Getriebe oder einen Elektromotor, an einer Kraftfahrzeugkarosserie abzustützen. Zudem erhöht ein Aggregatelager den Fahrkomfort, indem es die von dem Kraftfahrzeugaggregat erzeugten Vibrationen isoliert und Fahrbahnanregungen dämpft.

Klassische Aggregatelager weisen ein Innenteil, das mit dem Kraftfahrzeugaggregat verbindbar ist, einen als Isolations- und Dämpfungselement wirkenden elastomeren Tragkörper, und ein Außenteil auf. Das Außenteil kann eine Außenhülse sein, die mehrteilig ausgebildet sein kann.

So geht aus DE 10 2005 058 632 A1 ein Rundlager hervor, das eine Innenbuchse, ein elastomeres Lagerelement und eine Außenbuchse aufweist, wobei die Außenbuchse aus zwei Hälften besteht, die miteinander an ihren Enden verklipst werden.

Um die Bewegungen des Innenteils relativ zu dem Außenteil zu begrenzen, ist es bekannt, Anschläge vorzusehen. Dadurch wird die Lebensdauer des elastomeren Tragkörpers und damit des Aggregatelagers erhöht.

DE 11 2013 004 246 T5 offenbart eine Gummibuchse, die ein inneres Schaftelement und Zwischenringe umfasst, die über einen Gummikörper miteinander verbunden sind. Der Gummikörper ist mit einem äußeren zylindrischen Element verbunden, das halbgeteilt ist und ein Paar von Zylindern umfasst. Das Paar von Zylindern ist durch Einpassvorsprünge und Einpasslöcher miteinander verbunden. Zur Begrenzung der Bewegung des inneren Schaftelementes sind Stopperelemente vorgesehen, die mit dem Schaftelement verbunden sind.

Darüber hinaus geht aus DE 10 2015 016 454 A1 ein elastisches Lager mit einem Elastomermetallelement hervor, das einen formstabilen inneren Lagerkern und eine hohlzylindrische Außenschale umfasst, wobei die Außenschale aus zwei Schalenhälften gebildet ist. Beide Schalenhälften weisen Längsspaltränder und axial versetzte Zungen auf, die sich unter die andere Schalenhälfte schieben, wenn die Außenschale zum Aufbau einer Vorspannung in ein rohrförmiges Lagergehäuse eingepresst wird, so dass die Längsspaltränder aneinander anliegen. An den inneren Lagerkern sind ballige Elastomeranschläge fest angehaftet, die eine Bewegung des Elastomermetallelementes relativ zu der Außenschale begrenzt.

Aus der EP 1 628 040 A1 ist ein hydraulisch dämpfendes Lager bekannt, welches ein Verankerungsteil in einem elastischen Tragkörper aufweist. Ein Lagergehäuse umgibt den Tragkörper umfangsseitig, ein Lagerdeckel ist stirnseitig zum Tragkörper angeordnet. In den Tragkörper ist ein Außenring eingebettet. Der Lagerdeckel ist mit dem Außenring verklipst und das Lagergehäuse ist um den Deckelrand des Lagerdeckels gebördelt.

Die DE 10 2004 051 112 B3 offenbart ein Lager zur Befestigung und Lagerung einer Kolbenstange. Es umfasst ein Innenteil für das axiale Ende der Kolbenstange des Dämpfers. Das Innenteil ist von einem elastomeren Lagerkörper umgeben, in welchen ein Außenteil mit außenumfangsseitigen Schnappnasen aufgenommen ist. Das Außenteil ist vermittels seiner Schnappnasen in einem Gehäuse verklipst, das außenumfangsseitig zum elastomeren Lagerkörper angeordnet ist.

Bei den vorstehend genannten Lagern reicht der für die Anschläge benötigte Bauraum nicht aus, um die technischen Anforderungen bezüglich der Dämpfungs- und Anschlagcharakteristik zu erfüllen. Von außen aufgesetzte Anschläge haben zudem den Nachteil, dass die Befestigung nur schwer und prozessintensiv möglich ist. Zudem verursachen zusätzliche Bauteile Mehrkosten.

Der Erfindung liegt die Aufgabe zugrunde, ein Aggregatelager zu schaffen, das ausreichend Bauraum zur Integration von Anschlägen zur Verfügung stellt und zudem kostengünstig ist.

Diese Aufgabe wird durch ein Aggregatelager mit den Merkmalen des Anspruchs 1 gelöst. Vorteilhafte Ausgestaltungen des Aggregatelagers sind Gegenstand der abhängigen Ansprüche.

Das erfindungsgemäße Aggregatelager für ein Kraftfahrzeugaggregat weist ein Innenteil, einen elastomeren Tragkörper, in den das Innenteil eingebettet ist und ein Außenteil auf, das den Tragkörper umgibt, wobei das Außenteil ein erstes Teil und ein zweites Teil aufweist, die mit wenigstens einem mit dem Tragkörper verbundenen Befestigungselement verklipst sind.

Durch das Fügen der beiden Teile wird eine den Tragkörper umschließende Geometrie geschaffen, welche einen Hinterschnitt und dadurch eine Überdeckung erzeugt. Die Überdeckung kann als Anschlag genutzt werden. Da für die Anschläge kein zusätzlicher Bauraum oder zusätzliche Mehrkosten verursachende Bauteile benötigt werden, können auf einfache Art und Weise die bauraumtechnischen Anforderungen erfüllt werden. Ferner ermöglicht das Verklipsen der beiden Teile mit dem Befestigungselement eine einfache Befestigung der beiden Teile an dem Tragkörper. Zudem wird durch das Verklipsen eine kostengünstige Transportsicherung für die beiden Teile geschaffen.

Vorteilhaft weisen die Teile Anlageflächen auf, über die sie miteinander in Kontakt stehen. Weiterhin vorteilhaft ist das Außenteil als Außenhülse ausgebildet. Weiterhin vorteilhaft weist der Tragkörper wenigstens eine Tragfeder auf, an der das Befestigungselement festgelegt ist. Darüber hinaus kann der Tragkörper zwei Befestigungselemente aufweisen. So kann der Tragkörper zwei Tragfedern aufweisen, wobei an jeder Tragfeder ein Befestigungselement festgelegt ist.

In einer vorteilhaften Ausgestaltung weist wenigstens eines der Teile an einer dem Tragkörper zugewandten Innenumfangsfläche wenigstens einen Anschlag auf. Dadurch sind die innenliegenden Anschläge in die vorhandenen Bauteile integriert, so dass kein zusätzlicher Bauraum oder zusätzliche Bauteile, die Mehrkosten verursachen, benötigt werden. Der Anschlag kann als ein von der Innenumfangsfläche abragender Absatz ausgebildet sein. Ferner kann der Anschlag als eine in das Teil eingebrachte Einformung ausgebildet sein, die von der Innenumfangsfläche radial einwärts abragt. Bevorzugt wird der wenigstens eine Anschlag während der Herstellung des Teils, beispielsweise durch Umformen des Teils oder während des Spritzgießens des Teils, erzeugt. Vorteilhaft kann das wenigstens eine Teil mehrere Anschläge aufweisen. Weiterhin vorteilhaft weist jedes der Teile an einer dem Tragkörper zugewandten Innenumfangsfläche wenigstens einen Anschlag auf.

In einer vorteilhaften Ausgestaltung weist das wenigstens eine Befestigungselement wenigstens ein Paar Vorsprünge auf, wobei ein erster Vorsprung in eine Aussparung des ersten Teils und ein zweiter Vorsprung in eine Aussparung des zweiten Teils eingreift, um die Teile mit dem Befestigungselement zu verklipsen. Dadurch wird eine einfache und kostengünstige Rast- oder Klipsverbindung geschaffen, welche die Teile an dem Tragkörper festlegt. Vorteilhaft sind die Vorsprünge starr und die Teile elastisch ausgebildet. Zum Verklipsen der Teile mit dem Befestigungselement lenken die Teile elastisch aus, so dass die Vorsprünge in den Ausnehmungen einrasten und aus diesen herausragen und/oder diese hintergreifen können. Weiterhin vorteilhaft sind die Aussparungen als Durchbrüche ausgebildet. Dadurch ragen die Vorsprünge aus den Aussparungen heraus.

In einer vorteilhaften Ausgestaltung weist das wenigstens eine Befestigungselement ein Paar sich gegenüberliegende erste Vorsprünge und ein Paar sich gegenüberliegende zweite Vorsprünge auf, wobei die ersten Vorsprünge in Aussparungen des ersten Teils eingreifen und die zweiten Vorsprünge in Aussparungen des zweiten Teils engreifen, um die beiden Teile mit dem Befestigungselement zu verklipsen. Dadurch wird eine sichere Befestigung der Teile an dem Tragkörper geschaffen. Bevorzugt liegen die ersten Vorsprünge beziehungsweise die zweiten Vorsprünge auf einer Achse, die orthogonal zu einer Längsachse des Aggregatelagers ist. Weiterhin vorteilhaft liegen sich die Aussparungen eines jeden Teils gegenüber. Vorteilhaft liegen die Aussparungen eines jeden Teils auf einer Achse, die orthogonal zu einer Längsachse des Aggregatelagers ist. Weiterhin vorteilhaft sind die Aussparungen als Durchbrüche ausgebildet. Dadurch ragen die Vorsprünge aus den Aussparungen heraus.

In einer vorteilhaften Ausgestaltung weist jeder Vorsprung eine Einführschräge zum Einführen in die Aussparung auf. Dadurch wird Montage der Teile erleichtert. Vorteilhaft ist die Einführschräge als eine im Querschnitt konisch verlaufende Schräge ausgebildet. Dadurch sind die Vorsprünge als schräg abgeflachte Stege ausgebildet.

In einer vorteilhaften Ausgestaltung weist das wenigstens eine Befestigungselement wenigstens ein Zentrierelement auf, das formschlüssig in Ausnehmungen der Teile eingreift. Dadurch werden die beiden Halbschalen während der Montage zueinander zentriert. Zudem wird sichergestellt, dass der Tragkörper immer die richtige Position innerhalb der Teile einnimmt. Bevorzugt ist das Zentrierelement zwischen einem ersten Vorsprung und einem zweiten Vorsprung angeordnet. Weiterhin vorteilhaft weist das Befestigungselement zwei sich gegenüberliegende Zentrierelemente auf, so dass ein erstes Zentrierelement zwischen einem ersten Vorsprung und einem zweiten Vorsprung und ein zweites Zentrierelement gegenüberliegend zwischen einem ersten Vorsprung und einem zweiten Vorsprung angeordnet ist. In einer vorteilhaften Ausgestaltung ist das Zentrierelement als ein zwischen dem ersten Vorsprung und dem zweiten Vorsprung in Längsrichtung des Aggregatelagers erstreckender Steg ausgebildet. Weiterhin vorteilhaft bilden die Ausnehmungen im verklipsten Zustand eine Öffnung, in die das Zentrierelement formschlüssig eingreift.

In einer vorteilhaften Ausgestaltung weist jedes der Teile ein formschlüssiges Verbindungselement und eine dazu korrespondierende Aufnahme für das Verbindungselement auf. Dadurch wird eine sichere formschlüssige Verbindung zwischen den beiden Teilen geschaffen, die ein Verrutschen der Teile während des Transports wirksam unterbindet. In einer vorteilhaften Ausgestaltung ist das Verbindungselement als ein von dem Teil abragendes Stiftelement und die Aufnahme als ein in das Teil eingebrachtes Sackloch ausgebildet, in das das Stiftelement einsetzbar ist. Weiterhin vorteilhaft sind das Verbindungselement und die dazu korrespondierende Aufnahme an einer Anlagefläche des Teils angeordnet.

In einer vorteilhaften Ausgestaltung ist in eine Innenumfangsfläche eines jeden Teils eine Vertiefung eingebracht, in die das Befestigungselement im verklipsten Zustand formschlüssig einliegt. Dadurch kann der Tragkörper in einer genauen Position zwischen den beiden Teilen fixiert werden. Vorteilhaft entspricht die Vertiefung einer Kontur des Befestigungselements.

In einer vorteilhaften Ausgestaltung sind die Teile als Halbschalen ausgebildet und an sich gegenüberliegenden Anlageflächen miteinander verbunden. Durch die horizontale Trennung des Außenteils in zwei halbschalenförmige Teile wird der Tragkörper vollständig umgeben. In einer vorteilhaften Ausgestaltung umgibt jede Halbschale den Tragkörper zur Hälfte.

In einer vorteilhaften Ausgestaltung ist das wenigstens eine Befestigungselement formschlüssig, kraftschlüssig und/oder stoffschlüssig mit dem Tragkörper verbunden. Dadurch wird eine sichere und ausreichende Befestigung des Befestigungselements an dem Tragkörper und damit ein sicherer Halt der beiden Teile an dem Tragkörper geschaffen. So kann das Befestigungselement auf den Tragkörper aufgepresst und/oder mit dem Tragkörper verklebt sein. Ferner kann das Elastomer des Tragkörpers an das Befestigungselement angespritzt oder anvulkanisiert sein.

In einer vorteilhaften Ausgestaltung ist das Befestigungselement ein Ringelement.

In einer vorteilhaften Ausgestaltung sind das Befestigungselement und/oder die Teile aus Kunststoff. Dadurch weist das Aggregatelager ein niedriges Gewicht auf und ist zudem kostengünstig in der Herstellung. Darüber hinaus können das Befestigungselement und/oder die Teile aus faserverstärktem Kunststoff sein. Ferner können das Befestigungselement und/oder die Teile aus Metall sein, oder das Befestigungselement kann aus Metall und die Teile können aus Kunststoff sein. Oder das Befestigungselement kann aus Kunststoff und die Teile können aus Metall sein.

Nachfolgend werden das Aggregatelager sowie weitere Merkmale und Vorteile anhand von Ausführungsbeispielen näher erläutert, die in den Figuren schematisch dargestellt sind. Hierbei zeigt:
- Fig. 1: eine perspektivische Darstellung eines Aggregatelagers gemäß einer ersten Ausführungsform mit zwei nicht-verklipsten Halbschalen;
- Fig. 2: einen Schnitt entlang der Linie II-II von Fig. 1 ohne Innenteil;
- Fig. 3: eine vergrößerte Darstellung des Ausschnitts III aus Fig. 2;
- Fig. 4: eine perspektivische Darstellung des Aggregatelagers mit verklipsten Halbschalen;
- Fig. 5: einen Schnitt durch das Aggregatelager entlang der Linie IV-IV von Fig. 4 ohne Innenteil;
- Fig. 6: eine vergrößerte Darstellung des Ausschnitts VI von Fig. 5;
- Fig. 7: einen Schnitt entlang der Linie VII-VII in Fig. 4;
- Fig. 8: eine perspektivische Darstellung eines Aggregatelagers gemäß einer zweiten Ausführungsform mit zwei nicht-verklipsten Halbschalen;
- Fig. 9: einen Schnitt entlang der Linie IX-IX von Fig. 8;
- Fig. 10: eine vergrößerte Darstellung des Ausschnitts X von Fig. 9;
- Fig. 11: eine perspektivische Darstellung des Aggregatelagers gemäß der zweiten Ausführungsform mit verklipsten Halbschalen;
- Fig. 12: einen Schnitt entlang der Linie XII-XII von Fig. 11;
- Fig. 13: eine vergrößerte Darstellung des Ausschnitts XIII in Fig. 12; und
- Fig. 14: einen Schnitt entlang der Linie XIV-XIV in Fig. 11.

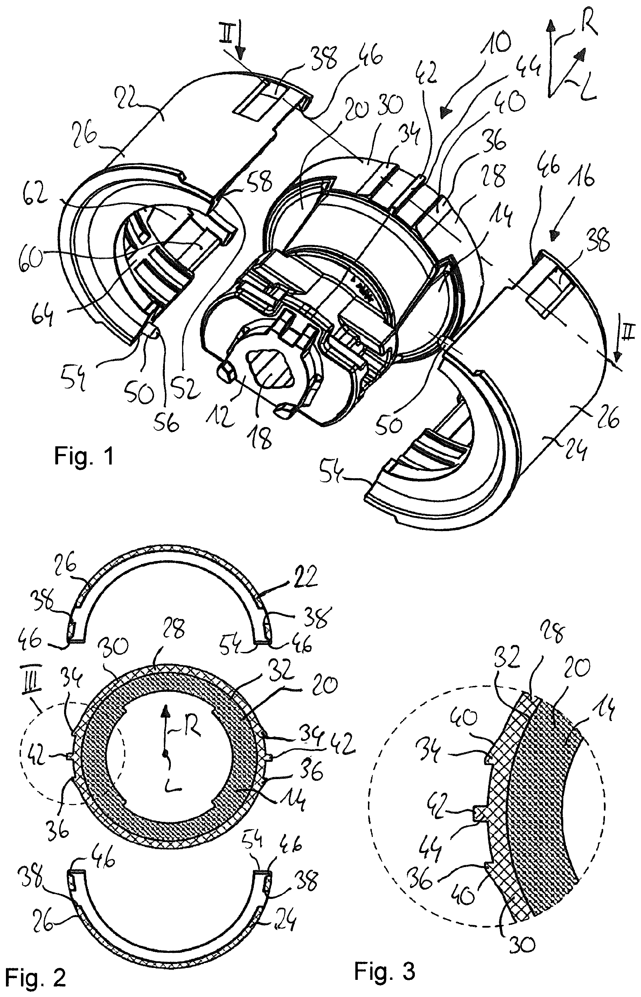

In den Figuren 1 bis 7 ist ein Aggregatelager 10 gemäß einer ersten Ausführungsform gezeigt, das zur Lagerung eines nicht dargestellten Kraftfahrzeugaggregats, wie beispielsweise eines Verbrennungsmotors, eines Getriebes oder eines Elektromotors, an einer nicht dargestellten Fahrzeugkarosserie dient. Das Aggregatelager 10 isoliert die von dem Kraftfahrzeugaggregat erzeugten Vibrationen und dämpft zudem Fahrbahnanregungen.

Wie durch eine Zusammenschau der Figuren 1, 4 und 7 ersichtlich ist, weist das Aggregatelager 10 ein Innenteil 12, einen elastomeren Tragkörper 14, in den das Innenteil 12 eingebettet ist, und ein Außenteil 16 auf, das den Tragkörper 14 umgibt.

Das Innenteil 12 ist aus Metall und weist eine Durchgangsöffnung 18 auf, in die ein nicht dargestellter Tragarm oder Bolzen einsetzbar ist, um das Aggregatelager 10 mit einem Kraftfahrzeugaggregat zu verbinden.

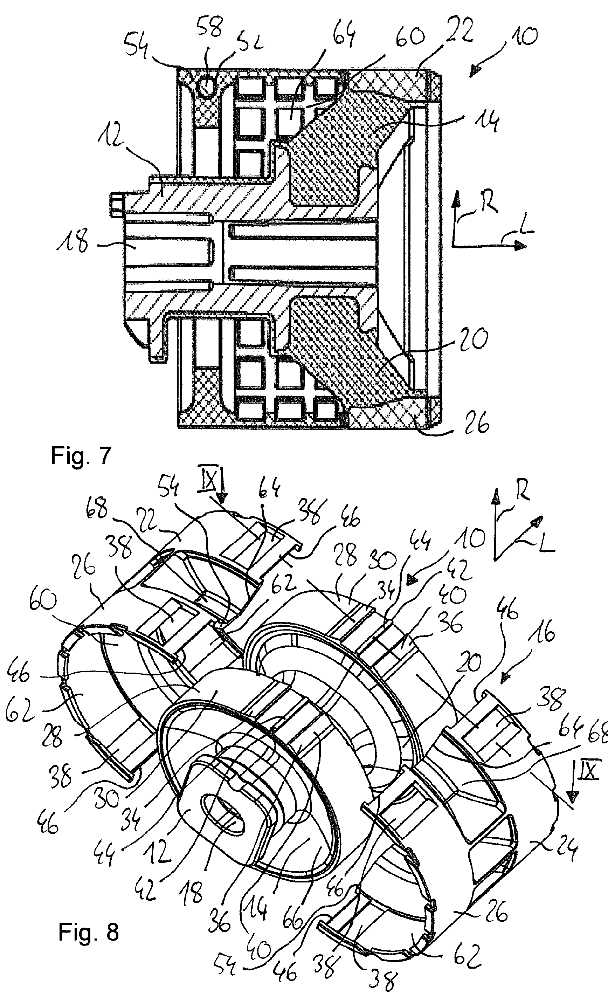

Wie insbesondere in Fig. 7 ersichtlich ist, umgibt der elastomere Tragkörper 18 das Innenteil 12, wobei der Tragkörper 14 stoffschlüssig mit dem Innenteil 12 verbunden, insbesondere angespritzt und/oder anvulkanisiert ist. Der Tragkörper 18 weist eine erste Tragfeder 20 auf, die in Radialrichtung R von dem Innenteil 12 abragt.

Das Außenteil 16 ist vorliegend als Außenhülse ausgebildet und weist ein erstes Teil 22 und ein zweites Teil 24 auf, die gemäß den Figuren 1, 2, und 5 als Halbschalen 26 ausgebildet sind und an sich gegenüberliegenden Anlageflächen 54 miteinander verbunden sind. Die beiden Halbschalen 26 sind aus Kunststoff, insbesondere faserverstärktem Kunststoff, können jedoch auch aus Metall sein. Jede der Halbschalen 26 umgibt den Tragkörper 14 zur Hälfte.

Zur Befestigung der beiden Halbschalen 26 an dem Tragkörper 14 weist dieser ein Befestigungselement 28 in Form eines Ringelements 30 auf, das formschlüssig, kraftschlüssig und/oder stoffschlüssig mit der ersten Tragfeder 20 verbunden ist.

Wie insbesondere in den Figuren 2 und 3 ersichtlich ist, ist das Ringelement 30 mit einer Außenseite 32 der ersten Tragfeder 20 verbunden, beziehungsweise umgibt das Ringelement 30 die erste Tragfeder 20 außenumfangsseitig. Das Ringelement 30 kann auf die Außenseite 32 der ersten Tragfeder 20 aufgepresst und/oder mit dieser stoffschlüssig verbunden sein, beispielsweise durch Kleben, durch Einlegen des Befestigungselementes 28 in eine Spritzgußform und anschließendem Anspritzen des Elastomers des Tragkörpers 18 oder im 2-Komponenten Spritzgußverfahren.

Die beiden Halbschalen 26 sind mit dem Tragkörper 14, insbesondere dem Befestigungselement 28 verklipst, wie durch eine Zusammenschau der Figuren 1, 2, 3, 4, 5 und 6 ersichtlich ist.

Hierzu weist das Befestigungselement 28 ein Paar Vorsprünge 34, 36 auf, die in dazu korrespondierende Aussparungen 38 der Halbschalen 26 eingreifen beziehungsweise sich durch die Aussparungen 38 hindurch erstrecken.

Wie insbesondere in Fig. 2 ersichtlich ist, weist das Befestigungselement 28 ein Paar sich gegenüberliegende erste Vorsprünge 34 und ein Paar sich gegenüberliegende zweite Vorsprünge 26 auf, wobei die ersten Vorsprünge 34 in Aussparungen 38 des ersten Teils 22 eingreifen, und die zweiten Vorsprünge 36 in Aussparungen 38 des zweiten Teils 24 eingreifen. Dadurch sind die beiden Halbschalen 26 mit dem Befestigungselement 28 verklipst. Bei der Montage der beiden Halbschalen 26 werden die Halbschalen 26 elastisch ausgelenkt, damit die Vorsprünge 34, 36 in die Aussparungen 38 eingeführt werden können.

Wie insbesondere in Fig. 3 ersichtlich ist, weist jeder Vorsprung 34, 36 eine Einführschräge 40 auf, die das Einführen der Vorsprünge 34, 36 in die Aussparungen 38 erleichtert.

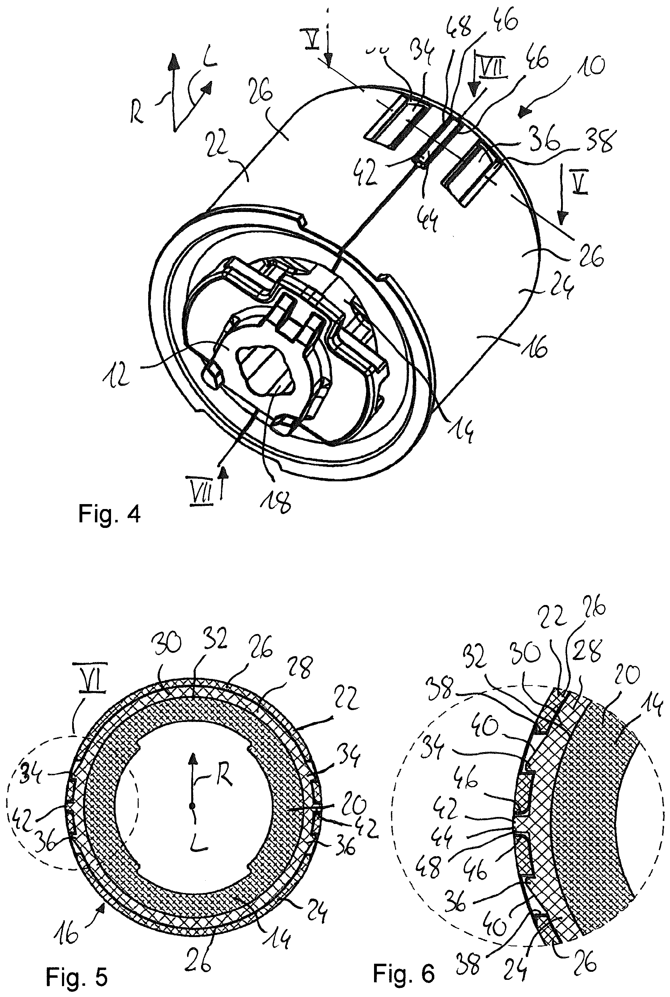

Zwischen einem ersten Vorsprung 34 und einem zweiten Vorsprung 36 weist das Befestigungselement 28 jeweils ein Zentrierelement 42 auf, das als ein sich in Längsrichtung L des Aggregatelagers erstreckender Steg 44 ausgebildet ist. Das Zentrierelement 42 greift formschlüssig in eine Öffnung 48 ein, welche durch zwei sich gegenüberliegende Aussparungen 46 der Halbschalen 26 gebildet wird, wie in den Figuren 4, 5 und 6 ersichtlich ist. Das Zentrierelement 42 dient dazu, die beiden Halbschalen 26 zueinander zu zentrieren und zudem den Tragkörper 14 zwischen den beiden Halbschalen 26 zu positionieren.

Wie ferner in den Figuren 1 und 7 ersichtlich ist, weist jede der Halbschalen 26 zudem ein formschlüssiges Verbindungselement 50 und eine dazu korrespondierende Aufnahme 52 für das Verbindungselement 50 auf. Das Verbindungselement 50 ist als ein von der Anlagefläche 54 abragendes Stiftelement 56 und die Aufnahme 52 ist als ein in die Anlagefläche 54 eingebrachtes Sackloch 58 ausgebildet, in das das Stiftelement 56 eingreift.

Wie zudem in Fig. 1 ersichtlich ist, ist in eine Innenumfangsfläche 60 einer jeden Halbschale 26 eine Vertiefung 62 eingebracht, die der Kontur des Befestigungselements 28 entspricht, und in der das Befestigungselement 28 formschlüssig einliegt. Dadurch ist der Tragkörper 14 in einer genauen Position in den Halbschalen 26 fixiert.

Jede der Halbschalen 26 weist an der Innenumfangsfläche 60 ein Anschlag 64 auf, die von dem Innenteil 12 beabstandet ist die Bewegungen des Innenteils 12 relativ zu dem Außenteil 16 begrenzt, wie in den Figuren 1 und 7 zu sehen ist.

Nachfolgend wird eine zweite Ausführungsform des Aggregatelagers 10 beschrieben, wobei für gleiche oder funktionsgleiche Teile dieselben Bezugszeichen verwendet werden.

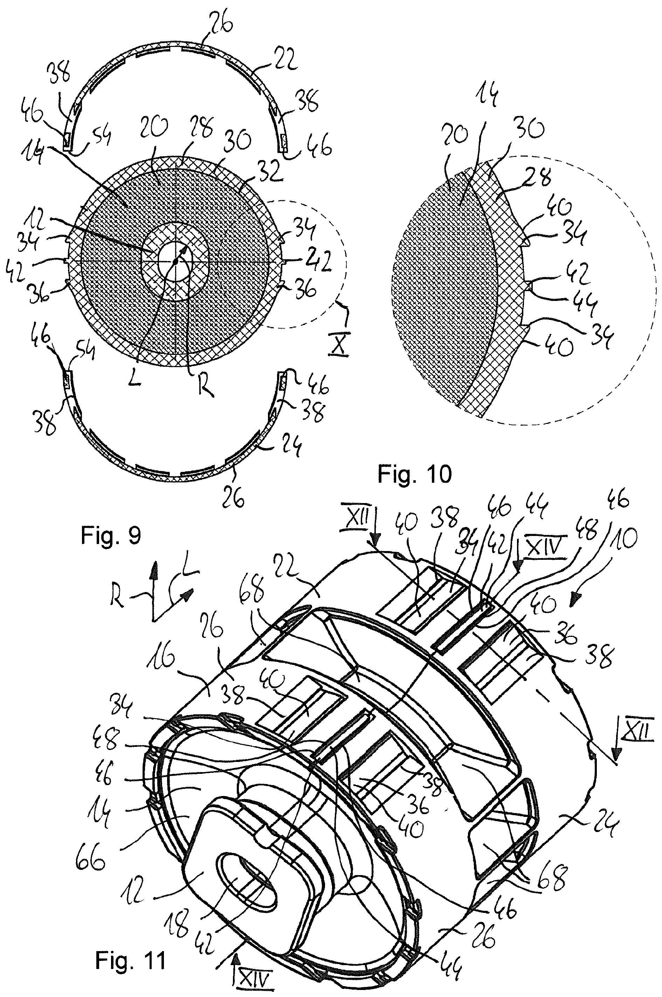

In den Figuren 8 bis 14 ist eine zweite Ausführungsform des Aggregatelagers 10 gezeigt, die sich von der ersten Ausführungsform dadurch unterscheidet, dass der Tragkörper 14 eine zweite Tragfeder 66 aufweist, wobei jede der Tragfedern 20, 66 mit einem Befestigungselement 28 versehen ist. Zum Verklipsen der beiden Halbschalen 26 mit den beiden Befestigungselementen 28 weist jede der Halbschalen 26 vier Aussparungen 38 auf, in die die Vorsprünge 34, 36 im verklipsten Zustand eingreifen beziehungsweise durch welche die Vorsprünge 34, 36 hindurchragen, wie in den Figuren 11 bis 13 ersichtlich ist.

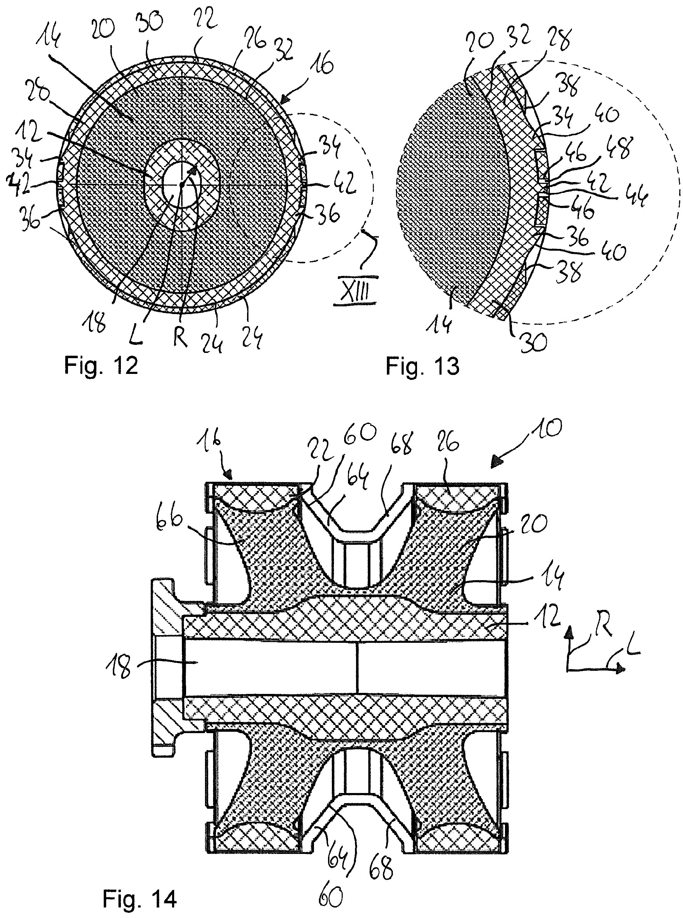

Der Anschlag 64 ist vorliegend als in die Halbschalen 26 eingebrachte Einformungen 68 ausgebildet, die von der Innenumfangsfläche 60 radial einwärts abragen. Wie in Fig. 14 ersichtlich ist, sind die Einformungen 68 im verklipsten Zustand der Halbschalen 26 zwischen den beiden Tragfedern 20, 66 angeordnet.

Wie in Fig. 8 ersichtlich ist, weisen die Halbschalen 26 der zweiten Ausführungsform kein formschlüssiges Verbindungselement 50 und keine dazu korrespondierende Aufnahme 52 für das Verbindungselement 50 auf. Es ist jedoch auch denkbar, dass die Halbschalen 26 entsprechend der ersten Ausführungsform ein formschlüssiges Verbindungselement 50 und eine dazu korrespondierende Aufnahme 52 für das Verbindungselement 50 aufweisen.

Das Aggregatelager 10 zeichnet sich durch das aus zwei Halbschalen 26 gebildete Außenteil 16 aus, die mit einem mit dem Tragkörper 14 verbundenen Befestigungselement 28 verklipst werden. Durch das Fügen der beiden Halbschalen 26 wird eine umschließende Geometrie geschaffen, welche einen Hinterschnitt und somit eine Überdeckung erzeugt, die als Anschlag 64 genutzt werden kann. Dadurch können bauraumtechnische Anforderungen erfüllt werden sowie zusätzliche Mehrkosten verursachende Bauteile vermieden werden.

### Bezugszeichenliste

- 10: Aggregatelager
- 12: Innenteil
- 14: Tragkörper
- 16: Außenteil
- 18: Durchgangsöffnung
- 20: erste Tragfeder
- 22: erstes Teil
- 24: zweites Teil
- 26: Halbschale
- 28: Befestigungselement
- 30: Ringelement
- 32: Außenseite
- 34: erster Vorsprung
- 36: zweiter Vorsprung
- 38: Aussparung
- 40: Einführschräge
- 42: Zentrierelement
- 44: Steg
- 46: Ausnehmung
- 48: Öffnung
- 50: Verbindungselement
- 52: Aufnahme
- 54: Anlagefläche
- 56: Stiftelement
- 58: Sackloch
- 60: Innenumfangsfläche
- 62: Vertiefung
- 64: Anschlag
- 66: zweite Tragfeder
- 68: Einformung
- R: Radialrichtung
- L: Längsachse

## Patentansprüche

1. Aggregatelager (10) für ein Kraftfahrzeugaggregat, aufweisend ein Innenteil (12), einen elastomeren Tragkörper (14), in den das Innenteil (12) eingebettet ist, und ein Außenteil (16), das den Tragkörper (14) umgibt, wobei das Außenteil (16) ein erstes Teil (22) und ein zweites Teil (24) aufweist, **dadurch gekennzeichnet, dass** das erste Teil (22) und das zweite Teil (24) mit wenigstens einem mit dem Tragkörper (14) verbundenen Befestigungselement (28) verklipst sind.

2. Aggregatelager (10) nach Anspruch 1, **dadurch gekennzeichnet, dass** wenigstens eines der Teile (22, 24) an einer dem Tragkörper (14) zugewandten Innenumfangsfläche (60) wenigstens einen Anschlag (64) aufweist.

3. Aggregatelager (10) nach Anspruch 1 oder 2, **dadurch gekennzeichnet, dass** das wenigstens eine Befestigungselement (28) wenigstens ein Paar Vorsprünge (34, 36) aufweist, wobei ein erster Vorsprung (34) in eine Aussparung (38) des ersten Teils (22) und ein zweiter Vorsprung (36) in eine Aussparung (38) des zweiten Teils (24) eingreift, um die Teile (22, 24) mit dem Befestigungselement (28) zu verklipsen.

4. Aggregatelager (10) nach Anspruch 3, **dadurch gekennzeichnet, dass** jeder Vorsprung (34, 36) eine Einführschräge (40) zum Einführen in die Aussparung (38) aufweist.

5. Aggregatelager (10) nach einem der vorhergehenden Ansprüche, **dadurch gekennzeichnet, dass** das wenigstens eine Befestigungselement (28) wenigstens ein Zentrierelement (42) aufweist, das formschlüssig in Ausnehmungen (46) der Teile (22, 24) eingreift.

6. Aggregatelager (10) nach einem der vorhergehenden Ansprüche, **dadurch gekennzeichnet, dass** jedes der Teile (22, 24) ein formschlüssiges Verbindungselement (50) und eine dazu korrespondierende Aufnahme (52) für das Verbindungselement (50) aufweist.

7. Aggregatelager (10) nach einem der vorhergehenden Ansprüche, **dadurch gekennzeichnet, dass** in eine Innenumfangsfläche (60) eines jeden Teils (22, 24) eine Vertiefung (62) eingebracht ist, in die das Befestigungselement (28) im verklipsten Zustand formschlüssig einliegt.

8. Aggregatelager (10) nach einem der vorhergehenden Ansprüche, **dadurch gekennzeichnet, dass** die Teile (22, 24) als Halbschalen (26) ausgebildet und an sich gegenüberliegenden Anlageflächen (54) miteinander verbunden sind.

9. Aggregatelager (10) nach einem der vorhergehenden Ansprüche, **dadurch gekennzeichnet, dass** das wenigstens eine Befestigungselement (28) formschlüssig, kraftschlüssig und/oder stoffschlüssig mit dem Tragkörper (14) verbunden ist.

10. Aggregatelager (10) nach einem der vorhergehenden Ansprüche, **dadurch gekennzeichnet, dass** das Befestigungselement (28) ein Ringelement (30) ist.

11. Aggregatelager (10) nach einem der vorhergehenden Ansprüche, **dadurch gekennzeichnet, dass** das Befestigungselement (28) und/oder die Teile (22, 24) aus Kunststoff sind.

## Claims

1. Unit bearing (10) for a motor vehicle unit, comprising an inner part (12), an elastomeric support body (14) in which the inner part (12) is embedded, and an outer part (16) which surrounds the support body (14), wherein the outer part (16) comprises a first part (22) and a second part (24), **characterised in that** the first part (22) and the second part (24) are clipped together with at least one fastening element (28) connected to the support body (14).

2. Unit bearing (10) according to claim 1, **characterised in that** at least one of the parts (22, 24) has at least one stop (64) on an inner circumferential surface (60) facing the support body (14).

3. Unit bearing (10) according to claim 1 or 2, **characterised in that** the at least one fastening element (28) has at least one pair of projections (34, 36) , wherein a first projection (34) engages in a notch (38) of the first part (22) and a second projection (36) engages in a notch (38) of the second part (24) in order to clip the parts (22, 24) to the fastening element (28).

4. Unit bearing (10) according to claim 3, **characterised in that** each projection (34, 36) has an insertion chamfer (40) for insertion into the notch (38).

5. Unit bearing (10) according to one of the preceding claims, **characterised in that** the at least one fastening element (28) has at least one centring element (42) which engages positively in recesses (46) of the parts (22, 24).

6. Unit bearing (10) according to one of the preceding claims, **characterised in that** each of the parts (22, 24) has a form-fitting connecting element (50) and a corresponding receptacle (52) for the connecting element (50).

7. Unit bearing (10) according to one of the preceding claims, **characterised in that** a deepening (62) is formed in an inner circumferential surface (60) of each part (22, 24), into which the fastening element (28) fits positively in the clipped state.

8. Unit bearing (10) according to one of the preceding claims, **characterised in that** the parts (22, 24) are designed as half-shells (26) and are connected to each other at opposing contact surfaces (54).

9. Unit bearing (10) according to one of the preceding claims, **characterised in that** the at least one fastening element (28) is connected to the support body (14) in a form-fitting, force-fitting and/or material-fitting manner.

10. Unit bearing (10) according to one of the preceding claims, **characterised in that** the fastening element (28) is a ring element (30).

11. Unit bearing (10) according to one of the preceding claims, **characterised in that** the fastening element (28) and/or the parts (22, 24) are made of plastic.

## Revendications

1. Palier d'agrégat (10) pour un agrégat de véhicule automobile, comprenant une partie intérieure (12), un corps de support élastomère (14) dans lequel est encastrée la partie intérieure (12), et une partie extérieure (16) qui entoure le corps de support (14), la partie extérieure (16) comportant une première pièce (22) et une deuxième pièce (24), **caractérisé en ce que** la première pièce (22) et la deuxième pièce (24) sont clipsées à l'aide d'au moins un élément de fixation (28) relié au corps de support (14).

2. Palier d'agrégat (10) selon la revendication 1, **caractérisé en ce qu'**au moins l'une des pièces (22, 24) comporte au moins une butée (64) sur une surface périphérique intérieure (60) tournée vers le corps de support (14).

3. Palier d'agrégat (10) selon la revendication 1 ou 2, **caractérisé en ce que** le au moins un élément de fixation (28) présente au moins une paire de saillies (34, 36), une première saillie (34) s'engageant dans un évidement (38) de la première pièce (22) et une deuxième saillie (36) s'engageant dans un évidement (38) de la deuxième pièce (24) afin d'encliqueter les pièces (22, 24) avec l'élément de fixation (28).

4. Palier d'agrégat (10) selon la revendication 3, **caractérisé en ce que** chaque saillie (34, 36) comporte un biseau d'insertion (40) pour l'insertion dans l'évidement (38).

5. Palier d'agrégat (10) selon l'une des revendications précédentes, **caractérisé en ce que** le au moins un élément de fixation (28) comporte au moins un élément de centrage (42) qui s'engage par complémentarité de forme dans des cavités (46) des pièces (22, 24).

6. Palier d'agrégat (10) selon l'une des revendications précédentes, **caractérisé en ce que** chacune des pièces (22, 24) comporte un élément de liaison (50) à engagement positif et un logement (52) correspondant pour l'élément de liaison (50).

7. Palier d'agrégat (10) selon l'une des revendications précédentes, **caractérisé en ce qu'**un renfoncement (62) est pratiqué dans une surface périphérique intérieure (60) de chaque pièce (22, 24), dans lequel l'élément de fixation (28) s'insère par complémentarité de forme à l'état clipsé.

8. Palier d'agrégat (10) selon l'une des revendications précédentes, **caractérisé en ce que** les pièces (22, 24) sont conçues comme des demi-coques (26) et sont reliées entre elles au niveau de surfaces d'appui (54) opposées.

9. Palier d'agrégat (10) selon l'une des revendications précédentes, **caractérisé en ce que** le ou les éléments de fixation (28) sont reliés au corps de support (14) par complémentarité de forme, par adhérence et/ou par liaison matière.

10. Palier d'agrégat (10) selon l'une des revendications précédentes, **caractérisé en ce que** l'élément de fixation (28) est un élément annulaire (30).

11. Palier d'agrégat (10) selon l'une des revendications précédentes, **caractérisé en ce que** l'élément de fixation (28) et/ou les pièces (22, 24) sont en plastique.
